Europäisches Patentamt
European Patent Office
Office européen des brevets

(19)

(11) Publication number: **0 320 658 A1**

(12) **EUROPEAN PATENT APPLICATION**

(21) Application number: **88119330.4**

(51) Int. Cl.4: **C08K 5/52 , C08L 69/00**

(22) Date of filing: **21.11.88**

The title of the invention has been amended (Guidelines for Examination in the EPO, A-III, 7.3).

(30) Priority: **16.12.87 US 133853**

(43) Date of publication of application: **21.06.89 Bulletin 89/25**

(84) Designated Contracting States: **DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mt. Vernon Indiana 47620(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

(54) **Polycarbonate composition containing phosphites.**

(57) A composition comprising an admixture of aromatic polycarbonate with anti-yellowing effective amount of phosphite of the formula:

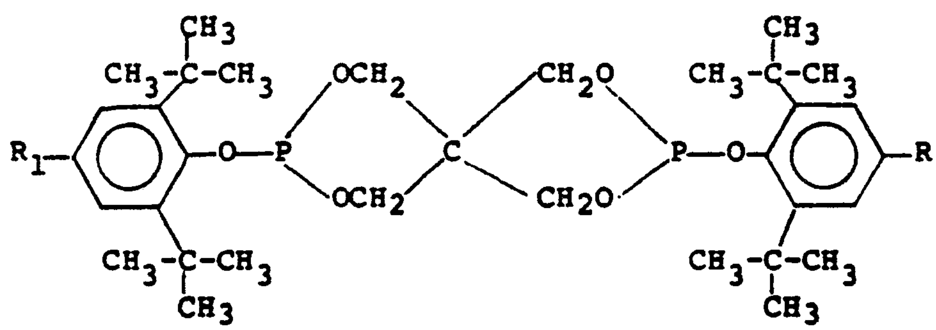

wherein R and $R_1$ are the same or different and are alkyl of one to six carbon atoms, inclusive.

EP 0 320 658 A1

## COMPOSITION

### BACKGROUND OF THE INVENTION

Aromatic polycarbonates are well known thermoplastic resins. As like many other resins, polycarbonates require certain stabilizers so as to protect them from various phenomenon to which they are exposed, for example sun light, heat during processing, water vapor and the like. With respect to thermal stabilization properties, polycarbonates are known to yellow, a phenomenon related to the decomposition of the polymer chains during exposure to heat during processing. Because of its high Tg, glass transition temperature, polycarbonates must be processed at a high temperature to make them sufficiently plastic to obtain the desired shapes utilized in various applications. Typical stabilizers used over the years are phosphites and phosphonites.

Typical of the phosphites are the phosphites disclosed in Fritz U.S.P. 3,305,520. However these phosphites have been expanded to include other phosphites of far more complex structure. In fact these phosphites have been specifically included with other types of additives in polycarbonates to achieve specific desired affects. U.S.P. 4,221,728, Jaquiss, et al is one of these references. In this reference a polycarbonate is combines with a minor amount of an end blocked polyorgano hydrogen siloxane which confers antioxidant-reducing agent-thermostabilizing properties which are allegedly due to the presence of silicon bonded active hydrogen, see U.S.P. 4,221,728, incorporated by reference. Optionally included in the invention of that reference is a minor amount of a phosphite of phosphonite and/or epoxy compound. When discussing the various phosphites and phosphonites which can be present in the polycarbonate composition, a generic schematic formula is presented at column 5, lines 30-38, which is broad enough to include the specific phosphites of this invention. However there is no specific direction to these phosphites. In fact none of the examples of the reference utilizes these phosphites and indeed there is no illustrative exemplification of these phosphites.

It has now been found that the usage of a particular phosphite with aromatic polycarbonate brings about significantly lower Yellowness Index (Y.I.) while substantially maintaining significant properties of the aromatic polycarbonate.

### SUMMARY OF THE INVENTION

In accordance with the invention there is a composition which comprises an aromatic polycarbonate in admixture with an antiyellowing effective amount of a phosphite of the formula

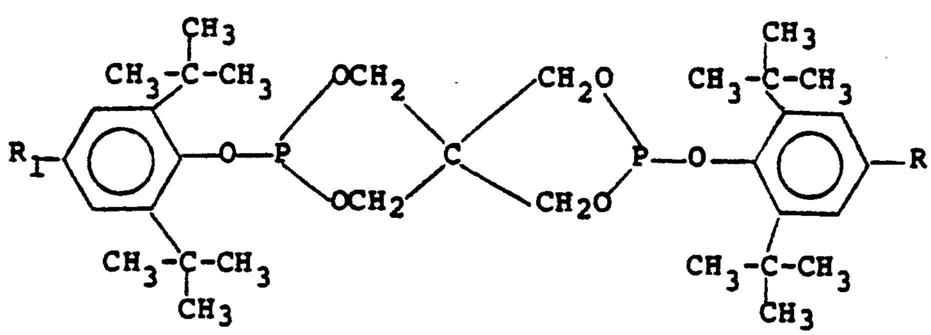

wherein R and $R_1$ are the same or different and are alkyl of one of six carbon atoms, inclusive.

A further composition is that wherein an end blocked polyorganohydrogen siloxane, preferably as disclosed in U.S.P. 4,221,728, is essentially absent. A further aspect of the invention is that epoxides, particularly those as disclosed in U.S.P. 4,221,728, also be essentially absent when the siloxane is essentially absent.

## DETAILED DESCRIPTION OF THE INVENTION

The aromatic carbonates suitable for use herein are readily prepared by reacting a dihydric phenol with a carbonate precursor, such as phosgene, a haloformate or a carbonate ester. Typically, such carbonate polymers are represented as comprising recurring structural units of the formula:

$$\left( O-A-O-\overset{\overset{\displaystyle O}{\|}}{C}- \right)$$

wherein A is a divalent aromatic radical of the dihydric phenol employed in the polymer producing reaction. Preferably, the carbonate polymers used to provide the resinous mixtures of the invention have an intrinsic viscosity (as measured in methylene chloride at 25° C.) ranging from about 0.30 to about 1.20 dl/g. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are:
2,2-bis-(4-hydroxyphenyl)propane;
hydroquinone;
resorcinol;
2,2-bis-(4-hydroxyphenyl)pentane;
biphenol
2,4'-(dihydroxydiphenyl)methane;
bis-(2-hydroxyphenyl)methane;
bis-(4-hydroxyphenyl)methane;
bis-(4-hydroxy-5-nitrophenyl)methane;
1,1-bis(4-hydroxyphenyl)ethane;
3,3-bis(4-hydroxyphenyl)pentane;
2,2-dihydroxydiphenyl;
2,6-dihydroxynaphthalene;
bis-(4-hydroxyphenyl)sulfone;
bis-(3,5-dimethyl-4- hydroxyphenyl)sulfone;
2,2-bis-(3,5-dimethyl-4-hydroxyphenyl)propane;
2,4'-dihydroxydiphenyl sulfone;
5'-chloro-2,4'-dihydroxydiphenyl sulfone;
bis-(4-hydroxyphenyl)diphenyl sulfone;
4'4'-dihydroxydiphenyl ether;
4,4'-dihydroxy-3,3'-dichlorodiphenyl ether;
4,4'-dihydroxy-2,5-dimethylphenyl ether;
and the like.

Other dihydric phenols which are also suitable for use in the preparation of the above polycarbonates are disclosed in U.S. 2,999,835; 3,038,365; 3,334,154 and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and U.S. 4,018,750 and 4,123,426, or by transesterification processes such as are disclosed in U.S. 3,153,008, as well as other processes known to those skilled in the art.

Branched polycarbonates are also useful, such as are described in U.S. 4,001,184. Also there can be utilized blends of a linear polycarbonate and a branched polycarbonate. Moreover, blends of any of the above materials may be employed in the practice of this invention to provide the aromatic polycarbonate. In any event, the preferred aromatic carbonate polymer for use as component (a) herein is a homopolymer derived from 2,2-bis(4-hydroxyphenyl)propane (bisphenol-A).

The phosphite useful herein is a phosphite of the formula

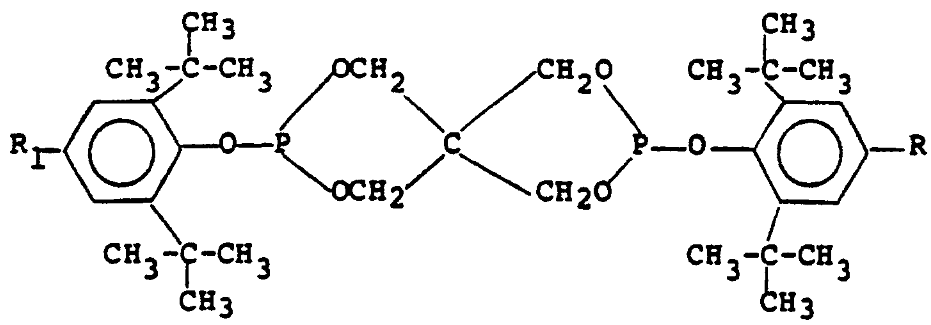

wherein R and $R_1$ are the same or different and are alkyl of one to six carbon atoms, inclusive.

Alkyl includes normal and branched groups, for example methyl, ethyl, propyl, isobutyl, neopentyl and tertiary butyl.

The phosphite wherein R and $R_1$ are methyl is preferred.

The compositions of the invention are prepared simply by mixing the phosphite and the aromatic polycarbonate together as in a Brabender mixture and then extruding into a filament which can be chopped into a pellet. The usual applications for which aromatic polycarbonates are useful are applicable here as well.

An anti-yellowing effective amount of the phosphite is admixed with the polycarbonate. Generally this is from about 0.01 to about 0.5 parts per hundred parts of the polycarbonate, preferably from about 0.02 to about 0.4 parts per hundred.

Extrusion and molding temperatures are the typical ones employed for polycarbonate.

The instant compositions may also optionally contain certain commonly known and used additives such as for example, flame retardants, antioxidants-antistatic agents, fillers such as glass fibers, glass beads, talc, mica, clay, and the like; mold release agents; ultraviolet radiation absorbers such as the benzophenones, benzotriazoles, benzylidene malonates, and the like. The compositions of the invention are expected to have better compatibility with mold release agents which are pentaerythritol based.

The following examples are presented to more fully and clearly illustrate the invention. Although the examples set forth the best mode presently known to practice the invention, they are intended to be and should be considered as illustrative rather than limiting the invention. In the examples, all parts and percentages are by parts per hundred unless otherwise specified.

## EXAMPLES

In the examples, bisphenol-A polycarbonate of intrinsic viscosity of 0.50-0.52 dl/g as measured in methylene chloride at 25° C is combined with the phosphite of the invention, bis(2,6-di-t.butyl-4-methylphenyl)pentaerythritol diphosphite, extruded at 500° F and molded at 570° and 600° F and the parts tested for the following properties according to the following test systems:

Y.I.: ASTM D1925

Notched Izod: ASTM D256.

Transmission (%): ASTM D1003

Haze (%): ASTM D1003

K.I. 6 min.: The Kasha Index is a measurement of the melt viscosity of the resin. The procedure for determining the Kasha Index is as follows: 7 grams of resin pellets, dried a minimum of 90 minutes at 125° C, are added to a modified Tinius-Olsen model T3 melt indexer; the temperature in the indexer is maintained at 300° C and the resin is heated at this temperature for 6 minutes; after 6 minutes the resin is forced through a 1.05 mm radius orifice using a plunger of radius 4.7 mm and an applied force of 7.7 kgs. The time required for the plunger to travel 5.1 cm is measured in centiseconds; this is reported as the KI. The higher the KI, the higher the melt viscosity and the more viscous the resin, and the harder or more difficult the processability.

Also tested in direct comparison with the invention phosphite with compositions prepared in the same manner was Irgafos® 168, a phosphite shown below obtained from Ciba Geigy which is used in commercial polycarbonate compositions.

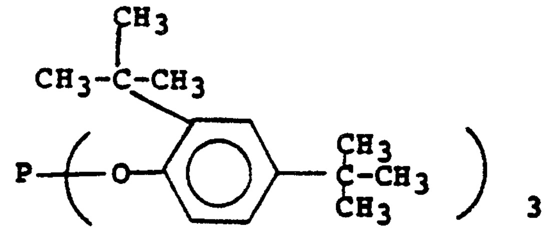

Below are the results:

TABLE 1

| COMPOSITION | 1 | 2 | 3 | 4 | 5 | 6 |
|---|---|---|---|---|---|---|
| LEXAN® 145 (parts) | 100 | 100 | 100 | 100 | 100 | 100 |
| Irgafos 168 (phr) | 0.1 | 0.05 | 0.025 | --- | --- | --- |
| New Stabilizer (phr) | --- | --- | --- | 0.1 | 0.05 | 0.025 |
| RESULTS | | | | | | |
| 1/8" N.Izod | 16.8 | 17.4 | 16.4 | 17.2 | 16.7 | 17.0 |
| (ft.lb/in) | (16.2) | (17.0) | (16.2) | (16.6) | (16.4) | (17.1) |
| Yellowness Index | 2.1 | 2.5 | 2.3 | 1.7 | 1.8 | 1.8 |
| | (2.2) | (2.5) | (2.2) | (1.7) | (1.7) | (1.8) |
| Transmission % | 91.0 | 90.8 | 90.9 | 91.1 | 91.1 | 91.2 |
| | (91.0) | (90.8) | (90.9) | (91.1) | (91.1) | (91.1) |
| Haze (%) | 0.7 | 1.3 | 0.8 | 0.9 | 0.7 | 0.7 |
| | (0.8) | (1.2) | (0.8) | (0.9) | (0.7) | (0.8) |
| KI 6 min. csec | 3420 | 3420 | 3420 | 3430 | 3420 | 3600 |
| (KI 6 min. csec) | 3650 | 3460 | 3580 | 3450 | 3490 | 3530 |
| ( ) = data on specimens molded at 600 °F. | | | | | | |

As is observed from the data, significant decreases in yellowing is observed with the phosphite of the invention in comparison with the standard phosphite. Additionally, almost no decrease in any of the other measured properties was observed. In fact in some samples, the transmission and haze appear to be somewhat improved over the standard phosphite.

## Claims

1. A composition comprising an admixture of aromatic polycarbonate with an anti-yellowing effective amount of a phosphite of the formula:

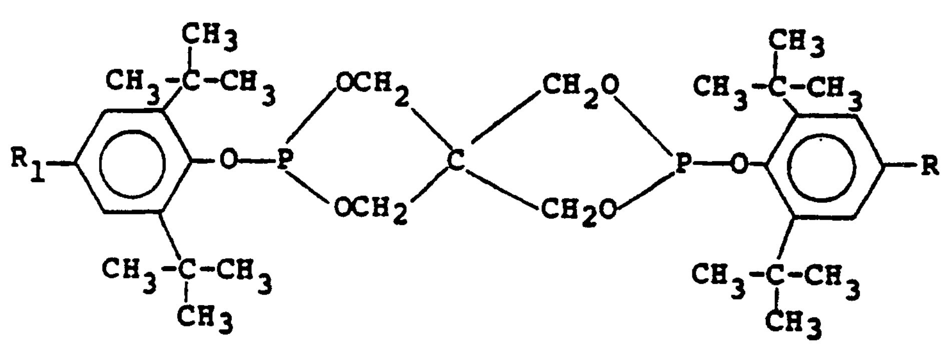

wherein R and $R_1$ are the same or different and are alkyl of one to six carbon atoms, inclusive.

2. The composition in accordance with claim 1 wherein R and $R_1$ are methyl.

3. The composition in accordance with claim 1 wherein the phosphite is present in from about 0.01 to 0.5 parts per hundred of the polycarbonate.

4. The composition in accordance with claim 3 wherein the phosphite is present in from about 0.02 to 0.4 parts per hundred.

5. The composition in accordance with claim 1 wherein an end blocked polyorganohydrogen siloxane is essentially absent.

6. The composition in accordance with claim 5 wherein an epoxide is also essentially absent.

European Patent Office

# EUROPEAN SEARCH REPORT

Application Number

EP 88 11 9330

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 038 876 (ADEKA ARGUS)<br>* Claims 12,14; pages 55-56, examples 41-42 *<br>----- | 1-6 | C 08 K 5/52<br>C 08 L 69/00 |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 29-03-1989 | HOFFMANN K.W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)